# EUROPÄISCHE PATENTSCHRIFT

(11) **EP 1 356 556 B1**
(45) Veröffentlichungstag und Bekanntmachung des Hinweises auf die Patenterteilung: **15.12.2004**
(21) Anmeldenummer: 02706660.4
(22) Anmeldetag: 30.01.2002
(51) Int. Cl.: H02B 1/21

(54) **VERTEILUNGSSYSTEM DER ENERGIETECHNIK ZUR VERSORGUNG ELEKTRISCHER VERBRAUCHER**
POWER ENGINEERING DISTRIBUTION SYSTEM FOR SUPPLYING ELECTRICAL CONSUMERS
SYSTEME DE DISTRIBUTION D'ENERGIE ELECTRIQUE POUR ALIMENTER DES CONSOMMATEURS ELECTRIQUES

(30) Priorität: 01.02.2001 DE 10106272
(43) Veröffentlichungstag der Anmeldung: 29.10.2003
(73) Patentinhaber: SIEMENS AKTIENGESELLSCHAFT, 80333 München (DE)
(72) Erfinder: HAAS, Volker, 06804 Muldenstein (DE)
(86) Internationale Anmeldenummer: PCT/DE2002/000383
(87) Internationale Veröffentlichungsnummer: WO 2002/061899

(56) Entgegenhaltungen:
- US-A- 6 075 692

## Beschreibung

Die Erfindung betrifft ein Verteilungssystem der Energietechnik zur Versorgung elektrischer Verbraucher mit:
- einer vertikalen Feldschienenanordnung mit einem zugehörige Feldschienen aufnehmenden Gehäuse,
- einem Geräteeinsatz mit einer daran rückseitig angebrachten mehrpoligen Kontaktvorrichtung für das Zusammenwirken mit den Feldschienen,
- einer zu dem Geräteeinsatz gehörenden Gerätetragplatte zur frontseitigen Bestückung mit Geräten der Schalt-, Steuer- und Schutztechnik in beliebiger Kombination, wobei an der Rückseite der Gerätetragplatte ein durch Wände begrenzter und die Kontaktvorrichtung aufnehmender Hohlraum angeordnet ist,
- einer Traganordnung zur Unterstützung und Befestigung des Geräteeinsatzes.

Die US-A-6 075 692 offenbart ein derartiges Verteilungssystem.

Ein Verteilungssystem mit den vorstehend genannten Merkmalen ist auch durch die DE 195 11 348 A1 bekannt geworden. Es zeichnet sich wegen des Verzichtes auf Fachböden gegenüber den bekannten Einschubsystemen (vgl. z. B. EP 0 681 751 B1) durch erhöhte Wirtschaftlichkeit aus und erlaubt den Bau preiswerter Verteilungen mit vielen Abzweigen im Bereich kleiner und mittlerer Leistungen. Einzelheiten der Traganordnung sind dabei nicht ersichtlich.

Im Zusammenhang mit einem ähnlichen Verteilungssystem nach der DE 197 38 705 A1, dem das Merkmal eines rückseitigen Hohlraumes am Geräteeinsatz zur Aufnahme der Kontaktvorrichtung fehlt, werden als Bestandteile einer Traganordnung im Wesentlichen eine Kombination einer ortsfesten Tragschiene und eines am Geräteeinsatz befindlichen Tragarmes sowie eines Zentrier- und Haltebolzens am Geräteeinsatz beschrieben, der mit einer ortsfesten Führungsöffnung zusammenwirkt. Es handelt sich daher um eine unsymmetrische Traganordnung, bei der es dem Benutzer obliegt, den Geräteeinsatz nach dem Absetzen auf der Tragschiene auf die Feldschienen bzw. auf die ortsfeste Führungsöffnung auszurichten. Diese Anordnung erfüllt die Merkmale eines "herausnehmbaren Teiles" im Sinne von IEC 439-1 (entsprechend VDE 0660 Teil 500).

Der Erfindung liegt ausgehend von einem Verteilungssystem nach der DE 195 11 348 A1 die Aufgabe zugrunde, ein vergleichbar wirtschaftliches Verteilungssystem mit einer Traganordnung zu schaffen, die einem Benutzer eine bequeme Handhabung bei hoher Sicherheit gewährt und die einfach herstellbar ist.

Gemäß der Erfindung wird diese Aufgabe dadurch gelöst, dass
- die Traganordnung ortsfest und symmetrisch angeordnete konsolenartige Träger umfasst, welche die Wände des Geräteeinsatzes oben und unten übergreifen, wobei während des Einsetzens bzw. der Entfernung des Geräteeinsatzes eine elektrisch leitende Verbindung mit geerdeten Bauteilen besteht.

Durch die Gestaltung des Geräteeinsatzes als Hohlkörper wird erreicht, dass die Frontseite der Gerätetragplatte in größerem Umfang als bisher zur Unterbringung der erwähnten Geräte genutzt werden kann, weil die Kontaktvorrichtung und die zugehörigen Kabel in dem Hohlraum unterzubringen sind. Ferner bewirkt das Zusammenwirken einer solchen hohlkastenartigen Anordnung mit den symmetrisch angeordneten konsolenartigen Trägern, dass Kipp- oder Drehbewegungen um eine horizontale Achse im Vergleich zu plattenförmigen Geräteeinsätzen vermindert werden, was die Ausrichtung der Kontaktvorrichtung auf die Feldschienenanordnung wesentlich erleichtert. Gleiche konsolenartige Träger können für Geräteeinsätze mit unterschiedlich großen Gerätetragplatten verwendet werden. Von einer gesonderten Erdung des Geräteeinsatzes bei der Montage oder Demontage kann abgesehen werden.

Die Erfindung kann in vorteilhafter Weise derart verwirklicht werden, dass die Wände des Geräteträgers zusammen mit der Gerätetragplatte ein den Hohlraum umschießendes kastenartiges Gehäuse bilden und dass zwei konsolenartige Träger vorgesehen sind, die an das Profil des Gehäuses in der Weise angepasst sind, dass sie den Geräteeinsatz bei der Verbindung mit der Feldschienenanordnung seitlich sowie oben und unten führen.

Das erwähnte kastenartige Gehäuse des Geräteeinsatzes kann vorteilhaft so aufgebaut sein, dass als Wände eine obere Wand, eine Rückwand sowie eine untere Wand vorgesehen sind, die als zusammenhängendes U-förmiges Blechteil ausgebildet sind, wobei die Rückwand und die obere Wand eine gemeinsame Ausnehmung für den Durchtritt der Kontaktvorrichtung aufweisen.

Die Bildung des kastenartigen Gehäuses durch das U-förmige Blechteil und die Gerätetragplatte hat neben der leichten Herstellbarkeit dieser Teile den Vorteil, dass gleiche U-förmige Blechteile mit unterschiedlich großen Gerätetragplatten kombinierbar sind. Auf diese Weise können Geräteeinsätze mit größeren Geräten oder einer größeren Anzahl von Geräten hergestellt werden.

Im Rahmen der Erfindung können die konsolenartigen Träger dem Profil des U-förmigen Blechteiles angepasst sein und können eine obere und eine untere Abwinklung sowie zur Anlage der Gerätetragplatte einen Anschlagwinkel besitzen. In dieser Ausführung eignen sich die Träger zur Unterbringung mehrerer Geräteeinsätze in einem Schaltfeld mit oder ohne gegenseitigen Abstand.

Zweckmäßig kann die untere Wand des U-förmigen Blechteiles eine vordere Stützfläche zur Auflage der Gerätetragplatte aufweisen, während die obere Wand wenigstens ein Widerlager für die Gerätetragplatte besitzt. Die Stützfläche ermöglicht es, die Gerätetragplatte abzustellen bzw. zu positionieren und dann mit dem Widerlager zu verbinden. Die Verbindung kann vorzugsweise lösbar durch Schrauben oder ähnliche Mittel erfolgen, wobei im Bereich der Stützfläche ineinander greifende Mittel, wie Zapfen und Löcher oder Schlitze vorgesehen sein können.

Kontaktvorrichtungen für ein Verteilungssystem der vorliegenden Art sind in unterschiedlichen Ausführungen verfügbar. Im Rahmen der Erfindung empfiehlt sich jedoch eine Ausführung mit einem etwa quaderförmigen Gehäuse, das durch Rippen gebildete Anlageflächen zur Erfassung von wenigstens zwei die Ausnehmung begrenzenden gegenüberliegenden Kanten besitzt. Dies ermöglicht es, die Kontaktvorrichtung mit dem kastenartigen Gehäuse ohne gesonderte Befestigungsteile zu verbinden. Es ist lediglich eine Sicherung gegen eine Verschiebung entlang den Kanten der Wände erforderlich, was durch eine die Ausnehmung der Wände wenigstens teilweise verschließende Haltebrücke geschehen kann.

In der Bemessung für einen durchschnittlichen Motorabzweig hat ein Geräteeinsatz der vorliegenden Art Dimensionen, die einem Benutzer das Übergreifen mit den Händen zum Einsetzen in ein Schaltfeld gestatten. Nach einer Weiterbildung der Erfindung kann jedoch die Handhabung dadurch weiter verbessert werden, dass der Geräteeinsatz einen Klemmenblock für Hilfsstromkreise und einen den Klemmenblock tragenden Halter aufweist, der eine vor auf der Gerätetragplatte montierten Geräten gelegene Montagefläche für den Klemmenblock besitzt. Diese Anordnung erweist sich gleichermaßen als vorteilhaft für die interne Verdrahtung des Geräteeinsatzes und die externe Weiterführung der betreffenden Hilfsstromkreise. Darüber hinaus kann der genannte Halter als derart bemessener Bügel ausgebildet sein, dass er von einem Benutzer des Geräteeinsatzes als Hangriff benutzbar ist, Hierdurch wird vermieden, dass der Benutzer die Frontflächen der auf der Gerätetragplatte befindlichen Geräte selbst als Hilfsmittel zum Hineindrücken und herausziehen des Geräteeinsatzes benutzen muss.

Der genannte Bügel kann zweckmäßig durch zwei parallele, mit dem Gehäuse des Geräteeinsatzes verbundene Tragstücke und eine die Tragstücke stirnseitig verbindende Hutschiene gebildet sein, wobei der Klemmenblock ein zum Aufschnappen auf die Hutschiene geeignetes Fußteil (Rastsockel oder dgl.) aufweist. Da Hutschienen aufgrund ihrer Profilierung einen hohe Biegesteifigkeit aufweisen, eignen sie sich gut zur Einleitung der Kräfte beim Einstecken und Lösen des Geräteeinsatzes.

Obwohl es an sich möglich wäre, den genannten Bügel so anzuordnen, dass er in der resultierenden Achse der Steck- und Lösekräfte des Geräteeinsatzes steht, empfiehlt es sich demgegenüber, dass der Bügel nahe dem einen seitlichen Ende des Geräteeinsatzes angeordnet ist, während am gegenüberliegenden seitlichen Ende eine Einstecköffnung für ein zur Demontage des Geräteeinsatzes vorgesehenes Hilfswerkzeug angeordnet ist. Hierdurch kann ein Benutzer beide Hände zu Hilfe nehmen und wird dadurch in die Lage versetzt, auch relativ schwere Geräteeinsätze sicher zu handhaben. Hierzu kann das Hilfswerkzeug eine Grifföffnung zum Hindurchgreifen einer Hand und einer Anschlagnase zur Begrenzung des Weges des Hilfswerkzeuges beim Lösen des Geräteeinsatzes von der Feldschienenanordnung besitzen. Hierdurch wird der Umstand berücksichtigt, dass bei der üblichen linksbündigen Montage der Feldschienenanordnung in den Schaltfeldern sich dementsprechend die linke Seite der Geräteeinsätze nahe der linken Wand der Schaltfelder und der dort befindlichen Gerüstelemente befindet. Die Verletzungsgefahr für die Hand eines Benutzers ist in diesem Bereich relativ erhöht. Durch die Ausrüstung des Hilfswerkzeuges mit einer Grifföffnung - ähnlich wie bei anderen bekannten Werkzeugen - und die Anschlagnase wird eine solche Verletzungsgefahr jedoch beseitigt. Hierzu kann noch dadurch beigetragen werden, dass der Abstand zwischen der Anschlagnase und einem frontseitigen Gerüstelement eines den Geräteeinsatz aufnehmenden Schaltfeldes auf einen zum Lösen des Geräteeinsatzes von der Feldschienenanordnung erforderlichen Weg beschränkt ist.

In dem Gehäuse des Geräteeinsatzes kann eine Klemmenabdeckung für die inneren Anschlussschienen der Kontakteinheiten angeordnet sein. Die Befestigung dieser Klemmenabdeckung kann durch Haltezungen erfolgen, die in Schlitze des Gehäuses eingreifen.

Es sei noch erwähnt, dass sich die vorstehend verwendeten Bezeichnungen "oben", "unten", "vorn", "hinten", "seitlich" usw. auf die Gebrauchslage des Geräteeinsatzes beziehen, wenn sich ein Betrachter vor der Feldschienenanordnung befindet.

Die Erfindung wird im Folgenden anhand des in den Figuren dargestellten Ausführungsbeispieles näher erläutert.
Die Figur 1 zeigt einen Teil eines Schaltfeldes mit vertikalen Gerüstelementen, einer Feldschienenanordnung und mit einem Geräteeinsatz.
Die Figur 2 zeigt in einer gesonderten Darstellung einen Geräteeinsatz sowie zwei konsolenartige Träger.
In der Figur 3 ist der Geräteeinsatz gemäß den Figuren 1 und 2 von der Rückseite gezeigt.
Die Figur 4 zeigt den Geräteeinsatz nach den vorangehenden Figuren in einer Seitenansicht.

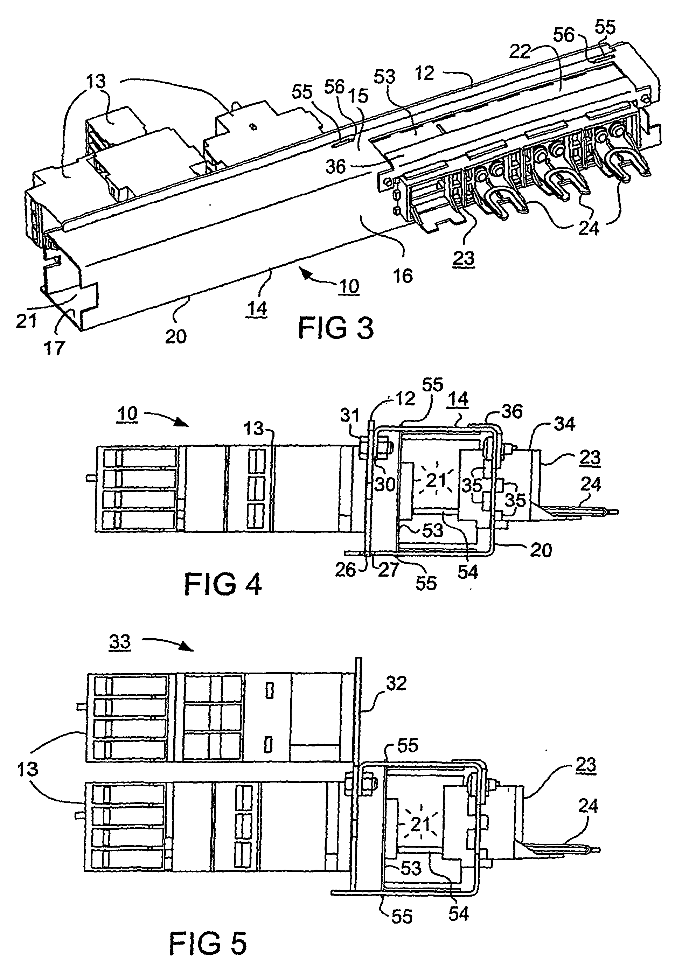

Einen Geräteeinsatz mit einer gegenüber dem Beispiel nach der Figur 4 vergrößerten Gerätetragplatte zeigt die Figur 5.

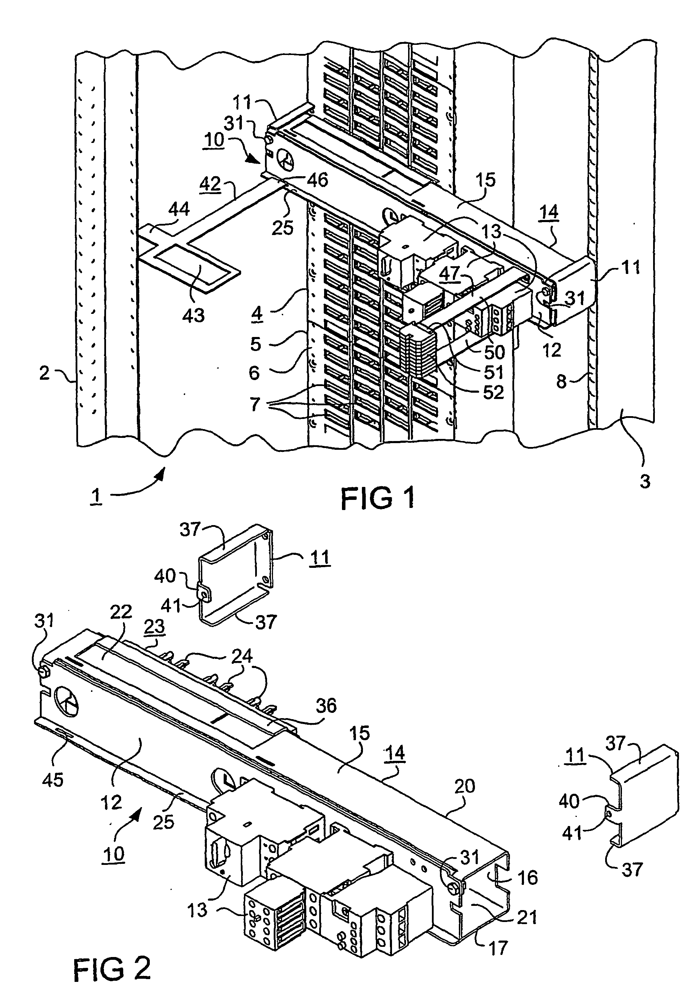

Das in der Figur 1 teilweise gezeigte Schaltfeld 1 weist ein Gerüst auf, von dem ein vorderes linkes Gerüstelement 2 sowie eine vertikale Zwischenwand 3 erkennbar sind. Eine vertikale Feldschienenanordnung 4 umfasst ein Gehäuse 5 mit einer frontseitigen Blende 6, die eine regelmäßige Anordnung von Durchtrittsöffnungen 7 für Kontaktvorrichtungen besitzt. In dem Gehäuse 5 sind in bekannter Weise vertikale Feldschienen untergebracht, mit denen Kontakteinheiten in Eingriff gebracht werden können, wie dies noch erläutert wird. Mehrere Schaltfelder 1 können in bekannter Weise neben einander angeordnet sein, um eine mehrfeldrige Schaltanlage zu bilden. Innerhalb jedes Feldes trennt die erwähnte Zwischenwand 3 einen die Feldschienenanordnung 4 und Geräteeinsätze enthaltenden Geräteraum von einem Kabelanschlussraum, der die von den Geräteeinsätzen zu den Verbrauchern führenden Kabel aufnimmt.

In der Figur 1 ist ferner ein Geräteeinsatz 10 gezeigt, der in symmetrisch angeordneten konsolenartigen Trägern 11 aufgenommen ist. Dabei ist der linke dieser Träger 11 am Gehäuse 5 der Feldschienenanordnung 4 befestigt, während der rechte Träger 11 an einer stirnseitigen Abkantung 8 der Zwischenwand 3 befestigt ist. Da am Gehäuse 5 und in der Abkantung 8 jeweils, wie angedeutet, eine Lochreihe angeordnet ist, lassen sich die konsolenartigen Träger 11 in einer gewünschten Position befestigen. Es sind daher in dem Schaltfeld mehrere Geräteeinsätze übereinander mit oder ohne gegenseitigen Abstand unterzubringen. Der Geräteeinsatz 10 besitzt eine fronseitige Gerätetragplatte 12, auf der sich Schalt-, Steuer- und Schutzgeräte 13 befinden.

Einzelheiten des Geräteeinsatzes 10 werden im Folgenden anhand der Figuren 2 und 3 erläutert. In beiden Figuren ist der Geräteeinsatz 10 von den konsolenartigen Trägern 11 getrennt dargestellt, wodurch nunmehr ersichtlich ist, dass der Geräteeinsatz 10 ein kastenartiges Gehäuse 14 besitzt, welches durch die Verbindung der frontseitigen Gerätetragplatte 12 mit einer oberen Wand 15, einer Rückwand 16 und einer unteren Wand 17 gebildet ist. Dabei zeigt die Figur 3, dass die genannten Wände zusammenhängend als U-förmiges Blechteil 20 ausgebildet sind, das zusammen mit der frontseitigen Gerätetragplatte 12 einen Hohlraum 21 umschließt. Durch eine zusammenhängende Ausnehmung 22 der oberen Wand 15 und der Rückwand 16 ist eine rückseitige Öffnung zum Einbau einer mehrpoligen Kontaktvorrichtung 23 geschaffen. Diese weist in bekannter Weite zangenartige Kontakteinheiten 24 zum Aufstecken auf die Feldschienen der Feldschienenanordnung 4 (Figur 1) auf.

Aus den Figuren 2 und 4 ist noch ersichtlich, dass die zu dem U-förmigen Blechteil 20 gehörende untere Wand 17 derart vor stehend ausgebildet ist, dass eine Stützfläche 25 zur Auflage der Gerätetragplatte 12 gebildet ist. Gemäß der Figur 4 ist durch einen oder mehrere nach unten abragende Zapfen 26 der Gerätetragplatte 12 und korrespondierende Schlitze 27 in der Stützfläche 25 dafür gesorgt, dass die Gerätetragplatte 12 in eine vorgesehene Position relativ zu dem U-förmigen Blechteil gebracht werden kann. Sie liegt dann an Widerlagern 30 an, die aus der oberen Wand 15 herausgebogen sind. Durch Schrauben 31 ist die Gerätetragplatte 12 mit dem U-förmigen Blechteil 20 lösbar verbunden. Dies ermöglicht es, die in den Figuren 1, 2, 3 und 4 gezeigte Gerätetragplatte 12 durch eine größere Gerätetragplatte 32 gemäß der Figur 5 zu ersetzen. Auf diese Weise kann ein Geräteeinsatz 33 mit größeren Geräten oder einer umfangreicheren Bestückung mit Geräten bereitgestellt werden.

Wie schon erwähnt, ragt die Kontaktvorrichtung 23 durch eine Ausnehmung 22, die sich über die obere Wand 15 und die Rückwand 16 erstreckt. Die Kontaktvorrichtung weist ein etwa quaderförmiges Gehäuse 34 auf, das an seinem Umfang mit Anlageflächen versehen ist, die durch versetzt angeordnete Rippen 35 gebildet sind. Aufeinander folgende Rippen 35 begrenzen eine Nut mit einer Breite entsprechend der Dicke der Rückwand 16, derart, dass die Kontaktvorrichtung von der Rückwand 16 an drei Seiten erfasst wird. An der verbleibenden Oberseite des Gehäuses 34 greift eine die obere Wand 15 und die Rückwand 16 übergreifende abgewinkelte Haltebrücke 36 zwischen die Rippen 35.

Die inneren Anschlussmittel der Kontaktvorrichtung 23 befinden sich in dem Hohlraum 21. In diesem sind daher die (zur Vereinfachung der Darstellung nicht gezeigten) Verbindungskabel zu den Geräten 13 zu verlegen.

Für beide beschriebenen Geräteeinsätze 10 und 33 sind die erwähnten konsolenartigen Träger 11 verwendbar, weil diese dem Profil des U-förmigen Blechteils 20 angepasst sind und hierzu obere und untere Abwinklungen 37 besitzen. Wird ein Geräteeinsatz 10 bzw. 33 zwischen die konsolenartigen Träger 11 eingeführt, so wird schon nach verhältnismäßig kurzem Weg eine oben und unten wirksame Führung erreicht, die ein Kippen des Geräteeinsatzes 10 bzw. 33 verhindert. Dabei besteht in. der Regel an vier Stellen eine Berührung zwischen den Trägern 11 und dem Geräteeinsatz 10 bzw. 33, was eine ausreichend sichere leitenden Verbindung mit dem geerdeten Gerüst des Schaltfeldes (Gerüstelement 2 und Zwischenwand 3) gewährleistet.

Bei weiterer Bewegung des Geräteeinsatzes 10 bzw. 33 werden die Kontakteinheiten 24 zu den Durchtrittsöffnungen 7 der Feldschienenanordnung 4 geführt und anschließend mit den Feldschienen in Eingriff gebracht. Im vollständig eingeschobenen Zustand liegt die Gerätetragplatte 12 bzw. 32 an Anschlagwinkeln 40 der konsolenartigen Träger 11 an, die mit einer Öffnung 41 zur Aufnahme einer Befestigungsschraube versehen sind.

In der Figur 1 ist ferner veranschaulicht, wie ein Benutzer den Geräteeinsatz 10 bzw. 33 in die dargestellte Position bringen und aus dieser entfernen kann. An der linken Seite des Geräteeinsatzes 10 bzw. 33 lässt sich hierzu ein Hilfswerkzeug 14 ansetzen, das vorn eine Grifföffnung 43 sowie eine Anschlagnase 44 und zum Einhaken in einer Einstecköffnung 45 am Geräteeinsatz 10 bzw. 33 einen Endhaken 46 aufweist. Wie man erkennt, steht die Anschlagnase 44 dem Gerüstelement 2 mit einem solchen Abstand gegenüber, dass der zum Trennen des Geräteeinsatzes 10 bzw. 33 von der Feldschienenanordnung 4 erforderliche Weg durchlaufen werden kann. Jedoch unterbleibt eine für den Benutzer unter Umständen störende Weiterbewegung des Geräteeinsatzes 10 bzw. 33.

Zur Unterstützung des Ausziehens des Geräteeinsatzes 10 bzw. 33 ist an dessen rechter Seite ein Halter 47 angeordnet, der zugleich zur Befestigung eines Klemmenblockes 52 für Hilfsstromkreise in einer ergonomisch günstigen Position dient. Hierzu ist der Halter 47 aus zwei Tragstücken 50 und einer frontseitigen Hutschiene 51 zusammengesetzt, auf die der Klemmenblock 52 mittels eines üblichen Rastsockels aufrastbar ist. Wie man erkenne, ragt der Halter 47 über ein darunter befindliches Gerät 13 so weit hinaus, dass einerseits genügend Raum zur Verlegung der Verdrahtung von Hilfsstromkreisen vorhanden ist und andererseits die Hutschiene 51 bzw. diese zusammen mit dem Klemmenblock 52 als Griff benutzt werden kann.

Das Gehäuse 14 des Geräteeinsatzes 10 bietet eine vorteilhafte Möglichkeit, einen Berührungsschutz für Anschlussschienen 54 der Kontakteinheiten 24 (Figuren 4 und 5) zu schaffen. Dies kann dadurch geschehen, dass in dem kastenartigen Gehäuse 14 des Geräteeinsatzes 10 eine Klemmenabdeckung 53 für Anschlussschienen 54 der Kontakteinheiten 24 angeordnet ist. Diese Klemmenabdeckung ist als ein U-förmiges Teil aus isolierendem Kunststoff ausgebildet, dessen mittlerer, zu der Gerätetragplatte 12 paralleler Schenkel Haltezungen 55 aufweist. In der oberen Wand 15 und der unteren Wand 17 des Gehäuses 14 sind Schlitze für den Durchtritt der Haltezungen 55 angeordnet, so dass die Klemmabdeckung 53 durch elastische Verformung in das Gehäuse 14 eingeführt werden kann, bis die Haltezungen 55 in die Schlitze 56 einschnappen.

### Bezugszeichenliste

- 1: Schaltfeld
- 2: Gerüstelement (vorn links)
- 3: Zwischenwand
- 4: Feldschienenanordnung
- 5: Gehäuse der Feldschienenanordnung 4
- 6: Blende der Feldschienenanordnung 4
- 7: Durchtrittsöffnung in der Blende 6
- 8: stirnseitige Abkantung der Zwischenwand 3
- 10: Geräteeinsatz
- 11: konsolenartiger Träger
- 12: Gerätetragplatte
- 13: Schalt-, Steuer- und Schutzgerät
- 14: kastenartiges Gehäuse
- 15: obere Wand
- 16: Rückwand
- 17: untere Wand
- 18 20: U-förmiges Blechteil
- 21: Hohlraum
- 22: Ausnehmung des Blechteiles 20
- 23: Kontaktvorrichtung
- 24: Kontakteinheit
- 25: Stützfläche für Gerätetragplatte 12 bzw. 32
- 26: abragender Zapfen der Gerätetragplatte 12 bzw. 32
- 27: Schlitz in der Stützfläche 25
- 28 30: Widerlager
- 31: Schraube
- 32: Gerätetragplatte (größere Ausführung)
- 33: Geräteeinsatz (größere Ausführung)
- 34: quaderförmiges Gehäuse der Kontaktvorrichtung 23
- 35: Rippe am Gehäuse 34
- 36: Haltebrücke
- 37: Abwinklung des konsolenartigen Trägers 11

- 40: Anschlagwinkel am Träger 11
- 41: Öffnung im Anschlagwinkel
- 42: Hilfswerkzeug
- 43: Grifföffnung
- 44: Anschlagnase am Hilfswerkzeug
- 45: Einstecköffnung am Geräteeinsatz 10 bzw. 33
- 46: Endhaken am Hilfswerkzeug 42
- 47: Halter für Klemmenblock 52

- 50: Tragstück
- 51: Hutschiene
- 52: Klemmenblock
- 53: Klemmenabdeckung
- 54: Anschlussschiene
- 55: Haltezunge der Klemmenabdeckung 53
- 56: Schlitz im Gehäuse 14 für Haltezunge 55

## Patentansprüche

1. Verteilungssystem der Energietechnik zur Versorgung elektrischer Verbraucher mit:
- einer vertikalen Feldschienenanordnung (4) mit einem zugehörige Feldschienen aufnehmenden Gehäuse (5),
- einem Geräteeinsatz (10; 33) mit einer daran rückseitig angebrachten mehrpoligen Kontaktvorrichtung (23) für das Zusammenwirken mit den Feldschienen,
- einer zu dem Geräteeinsatz (10; 33) gehörenden Gerätetragplatte (12; 32) zur frontseitigen Bestückung mit Geräten (13) der Schalt-, Steuer- und Schutztechnik in beliebiger Kombination, wobei an der Rückseite der Gerätetragplatte (12; 32) ein durch Wände begrenzter und die Kontaktvorrichtung (23) aufnehmender Hohlraum (21) angeordnet ist,
- einer Traganordnung zur Unterstützung und Befestigung des Geräteeinsatzes (10; 33),
**dadurch gekennzeichnet, dass**
- die Traganordnung ortsfest und symmetrisch angeordnete konsolenartige Träger (11) umfasst, welche die Wände des Geräteeinsatzes (10; 33) oben und unten übergreifen, wobei während des Einsetzens bzw. der Entfernung des Geräteeinsatzes (10; 33) eine elektrisch leitende Verbindung mit geerdeten Bauteilen besteht.

2. Verteilungssystem nach Anspruch 1,
**dadurch gekennzeichnet, dass**
die Wände des Geräteträgers (10; 33) zusammen mit der Gerätetragplatte (12; 32) ein den Hohlraum (21) umschließendes kastenartiges Gehäuses (14) bilden und dass zwei konsolenartige Träger (11) vorgesehen sind, die an das Profil des kastenartigen Gehäuse (14) in der Weise angepasst sind, dass sie den Geräteeinsatz (10; 33) bei der Verbindung mit der Feldschienenanordnung (4) seitlich sowie oben und unten führen.

3. Verteilungssystem nach Anspruch 2,
**dadurch gekennzeichnet, dass**
als Wände eine obere Wand (15), eine Rückwand (16) sowie eine untere Wand (17) vorgesehen sind, die als zusammenhängendes U-förmiges Blechteil (20) ausgebildet sind, wobei die Rückwand (16) und die obere Wand (15) eine gemeinsame Ausnehmung (22) für die Kontaktvorrichtung (23) aufweisen.

4. Verteilungssystem nach Anspruch 3,
**dadurch gekennzeichnet, dass**
die konsolenartigen Träger (11) dem Profil des U-förmigen Blechteiles (20) angepasst sind und eine obere und eine untere Abwinklung (37) sowie zur Anlage der Gerätetragplatte (12; 32) einen Anschlagwinkel (40) besitzen.

5. Verteilungssystem nach Anspruch 3,
**dadurch gekennzeichnet, dass**
die untere Wand (15) des U-förmigen Blechteiles (20) eine vordere Stützfläche (25) zur Auflage der Gerätetragplatte (12; 32) besitzt und dass die obere Wand (15) des kastenartigen Gehäuses (14) wenigstens ein Widerlager (30) für die Gerätetragplatte (12; 32) aufweist.

6. Verteilungssystem nach Anspruch 3,
**dadurch gekennzeichnet, dass**
die Kontaktvorrichtung (23) ein etwa quaderförmiges Gehäuse (34) mit Anlageflächen zur Erfassung von wenigstens zwei die Ausnehmung (22) begrenzenden gegenüberliegenden Kanten besitzt.

7. Verteilungssystem nach Anspruch 6,
**dadurch gekennzeichnet, dass**
die in die Ausnehmung (22) eingeführte Kontaktvorrichtung (23) durch eine die Ausnehmung (22) wenigstens teilweise verschließende Haltebrücke (36) gegen Verschiebung gesichert und hierdurch die Kontaktvorrichtung (23) mit dem U-förmigen Blechteil (14) verbunden ist.

8. Verteilungssystem nach einem der vorangehenden Ansprüche,
**dadurch gekennzeichnet, dass**
der Geräteeinsatz (10; 33) einen Klemmenblock (52) für Hilfsstromkreise und einen den Klemmenblock (52) tragenden Halter (47) aufweist, der eine vor auf der Gerätetragplatte (12; 32) montierten Geräten (13) gelegene Montagefläche für den Klemmenblock (52) besitzt.

9. Verteilungssystem nach Anspruch 8,
**dadurch gekennzeichnet, dass**
der Halter (47) als derart bemessener Bügel ausgebildet ist, dass er von einem Benutzer des Geräteeinsatzes (10; 33) als Handgriff benutzbar ist.

10. Verteilungssystem nach Anspruch 9,
**dadurch gekennzeichnet, dass**
der Bügel durch zwei parallele, mit dem Gehäuse (14) des Geräteeinsatzes (10; 33) verbundene Tragstücke (50) und eine die Tragstücke (50) stirnseitig verbindende Hutschiene (51) gebildet ist, wobei der Klemmenblock (52) ein zum Aufschnappen auf die Hutschiene (51) geeignetes Fußteil aufweist.

11. Verteilungssystem nach einem der vorangehenden Ansprüche,
**dadurch gekennzeichnet, dass**
der Geräteeinsatz (10; 33) eine Einstecköffnung (45) für ein zur Demontage des Geräteeinsatzes (10; 33) vorgesehenes Hilfswerkzeug (42) besitzt.

12. Verteilungssystem nach Anspruch 11,
**dadurch gekennzeichnet, dass**
das Hilfswerkzeug (42) eine Grifföffnung (43) zum Hindurchgreifen einer Hand eines Benutzers und eine mit einem ortsfesten Gerüstelement (2) zusammenwirkende Anschlagnase (44) zur Begrenzung des Weges des Hilfswerkzeuges (42) auf ein zum Lösen des Geräteeinsatzes (10; 33) von der Feldschienenanordnung (4) erforderliches Maß besitzt.

13. Verteilungssystem nach einem der vorangehenden Ansprüche,
**dadurch gekennzeichnet, dass**
der eine der konsolenartigen Träger (11) an dem Gehäuse (5) der Feldschienenanordnung (4) und der weitere konsolenartige Träger (11) an einer Zwischenwand (3) befestigt ist, die zwischen einem die Feldschienenanordnung (4) aufnehmenden Raum und einem Kabelanschlussraum angeordnet ist.

14. Verteilungssystem nach einem der vorangehenden Ansprüche,
**dadurch gekennzeichnet, dass**
in dem kastenartigen Gehäuse (14) des Geräteeinsatzes (10; 33) eine Klemmenabdeckung (53) für Anschlussschienen (54) der Kontakteinheiten (24) angeordnet ist.

15. Verteilungssystem nach Anspruch 14,
**dadurch gekennzeichnet, dass**
die Klemmenabdeckung einen zur Gerätetragplatte (12) parallelen Schenkel und von diesem ausgehende Haltezungen (55) aufweist, die in Schlitze (56) des Gehäuses (14) eingreifen.

## Claims

1. Power engineering distribution system for supplying power to electrical loads having:
- a vertical field rail arrangement (4) having a housing (5) accommodating associated field rails,
- a withdrawable part (10; 33) having a multi-pole contact apparatus (23), fitted to the rear of said withdrawable part, for the purpose of interacting with the field rails,
- a device mounting plate (12; 32) associated with the withdrawable part (10; 33) for the purpose of fitting switching-, control- and protection-engineering devices (13) in any combination to the front of said withdrawable part, a cavity (21) which is delimited by walls and accommodates the contact apparatus (23) being arranged on the rear of the device mounting plate (12; 32),
- a mounting arrangement for supporting and fixing the withdrawable part (10; 33),
**characterized in that**
- the mounting arrangement comprises mounts (11), which are in the form of brackets, are arranged symmetrically and such that they are fixed in position, and engage around the walls of the withdrawable part (10; 33) at the top and bottom, an electrically conductive connection with earthed components being formed when the withdrawable part (10; 33) is inserted or removed.

2. Distribution system according to Claim 1, **characterized in that** the walls of the device mount (10; 33) form, together with the device mounting plate (12; 32), a housing (14), which is in the form of a box and surrounds the cavity (21), and **in that** two mounts (11) in the form of brackets are provided which are matched to the profile of the housing (14) in the form of a box such that they guide the withdrawable part (10; 33) at the side as well as at the top and bottom when the connection is made with the field rail arrangement (4).

3. Distribution system according to Claim 2, **characterized in that** an upper wall (15), a rear wall (16) and a lower wall (17) are provided as the walls and are in the form of a connected U-shaped sheet-metal part (20), the rear wall (16) and the upper wall (15) having a common recess (22) for the contact apparatus (23).

4. Distribution system according to Claim 3, **characterized in that** the mounts (11) in the form of brackets are matched to the profile of the U-shaped sheet-metal part (20) and have an upper and a lower bent part (37) and, for the purpose of bearing the device mounting plate (12; 32), an angled stop (40).

5. Distribution system according to Claim 3, **characterized in that** the lower wall (15) of the U-shaped sheet-metal part (20) has a front supporting face (25) for the purpose of bearing the device mounting plate (12; 32), and **in that** the upper wall (15) of the housing (14) in the form of a box has at least one abutment (30) for the device mounting plate (12; 32).

6. Distribution system according to Claim 3, **characterized in that** the contact apparatus (23) has an approximately square housing (34) having bearing faces for gripping at least two opposing edges which delimit the recess (22).

7. Distribution system according to Claim 6, **characterized in that** the contact apparatus (23), which is inserted in the recess (22), is secured against being displaced by a retaining bridge (36) which at least partially closes the recess (22), and by this means the contact apparatus (23) is connected to the U-shaped sheet-metal part (14).

8. Distribution system according to one of the preceding claims, **characterized in that** the withdrawable part (10; 33) has a terminal block (52) for auxiliary circuits and a holder (47) which bears the terminal block (52) and has a mounting face for the terminal block (52) which is placed in front of devices (13) mounted on the device mounting plate (12; 32).

9. Distribution system according to Claim 8, **characterized in that** the holder (47) is in the form of a bracket which is dimensioned such that it can be used as a handle by a user of the withdrawable part (10; 33).

10. Distribution system according to Claim 9, **characterized in that** the bracket is formed by two parallel mounting pieces (50), which are connected to the housing (14) of the withdrawable part (10; 33), and a top-hat rail (51) which connects the mounting pieces (50) at the ends, the terminal block (52) having a foot part which is suitable for being snapped onto the top-hat rail (51).

11. Distribution system according to one of the preceding claims, **characterized in that** the withdrawable part (10; 33) has an insertion opening (45) for an auxiliary tool (42) provided for the purpose of dismantling the withdrawable part (10; 33).

12. Distribution system according to Claim 11, **characterized in that** the auxiliary tool (42) has a handle opening (43), through which a user's hands may pass, and a stop tab (44) interacting with a frame element (2), which is fixed in position, for the purpose of delimiting the path of the auxiliary tool (42) to an extent which is necessary for the field rail arrangement (4) to release the withdrawable part (10; 33).

13. Distribution system according to one of the preceding claims, **characterized in that** one of the mounts (11) in the form of brackets is fixed to the housing (5) of the field rail arrangement (4), and the other mount (11) in the form of a bracket is fixed to an intermediate wall (3) which is arranged between a chamber accommodating the field rail arrangement (4) and a cable connection chamber.

14. Distribution system according to one of the preceding claims, **characterized in that** a terminal cover (53) for connection rails (54) of the contact units (24) is arranged in the housing (14), in the form of a box, of the withdrawable part (10; 33).

15. Distribution system according to Claim 14, **characterized in that** the terminal cover has a limb, which is parallel to the device mounting plate (12), and retaining tongues (55) originating from said limb which engage in slots (56) in the housing (14).

## Revendications

1. Système de distribution dans le domaine du génie énergétique pour alimenter des récepteurs électriques, lequel système de distribution comprend :
- un agencement vertical de barres de tableau (4) auquel est associé un boîtier (5) recevant les barres de tableau,
- une monture d'appareils (10 ; 23) à l'arrière de laquelle est monté un dispositif de contact multipolaire (23) destiné à coopérer avec les barres de tableau,
- une plaque de support d'appareil (12 ; 32) associée à la monture d'appareils (10 ; 33) et destinée à monter à l'avant des appareils (13) de commutation, de commande et de protection dans une combinaison quelconque, un espace (21) délimité par des parois et recevant le dispositif de contact (23) étant ménagé à l'arrière de la plaque de support d'appareil (12 ; 32),
- un dispositif de support destiné à supporter et fixer la monture d'appareils (10 ; 33),
**caractérisé en ce que** le dispositif de support comporte des supports (11) de type console qui sont disposés de façon fixe et symétrique et qui s'engagent en haut et en bas avec les parois de la monture d'appareils (10 ; 33), une liaison électriquement conductrice avec des composants mis à la terre étant établie pendant le montage respectivement de démontage de la monture d'appareils (10 ; 33).

2. Système de distribution selon la revendication 1, **caractérisé en ce que** les parois de la monture d'appareils (10 ; 33) forment conjointement avec la plaque de support d'appareils (12 ; 32) un boîtier (14) de type caisse enfermant l'espace (21) et **en ce qu'**il est prévu deux supports (11) de type console, qui sont adaptés au profil du boîtier (14) de type caisse de façon à guider latéralement, en haut et en bas la monture d'appareils (10 ; 33) lors de la liaison avec l'agencement de barres de tableau (4).

3. Système de distribution selon la revendication 2, **caractérisé en ce qu'**il est prévu comme parois une paroi supérieure (15), une paroi arrière (16) et une paroi inférieure (17) qui sont conformées en pièce de tôle en U (20) continue, la paroi arrière (16) et la paroi supérieure (15) comportant une dépression commune (22) destinée au dispositif de contact (23).

4. Système de distribution selon la revendication 3, **caractérisé en ce que** les supports (11) de type console sont adaptés au profil de la pièce de tôle en U (20) et possèdent des parties repliées supérieure et inférieure (37) ainsi qu'une équerre de butée (40) destinée à l'installation de la plaque de support d'appareils (12 ; 32).

5. Système de distribution selon la revendication 3, **caractérisé en ce que** la paroi inférieure (15) de la pièce de tôle en U (20) présente une surface d'appui avant (25) destinée à supporter la plaque de support d'appareils (12 ; 32) et **en ce que** la paroi supérieure (15) du boîtier (14) de type caisse comporte au moins une patte d'appui (30) destinée à la plaque de support d'appareils (32 ; 32).

6. Système de distribution selon la revendication 3, **caractérisé en ce que** le dispositif de contact (23) possède un boîtier (34) sensiblement parallélépipédique présentant des surfaces d'appui destinées à recevoir au moins deux bords opposés délimitant la dépression (22).

7. Système de distribution selon la revendication 6, **caractérisé en ce que** le dispositif de contact (23), introduit dans la dépression (22), est empêché de se déplacer par un pont de retenue (36) fermant au moins partiellement la dépression (22) et **en ce que** le dispositif de contact (23) est de cette façon reliée à la pièce de tôle en U (14).

8. Système de distribution selon l'une des revendications précédentes, **caractérisé en ce que** la monture d'appareils (10 ; 33) comportant un bloc de serrage (52) destiné à un circuit auxiliaire et un support (47) qui supporte le bloc de serrage (52) et qui présente une surface de montage destinée au bloc de serrage (52) et placée devant les appareils (13) montés sur la plaque de support d'appareils (12 ; 32).

9. Système de distribution selon la revendication 8, **caractérisé en ce que** le support (47) est conformé en étrier dimensionné de telle sorte qu'il peut être utilisé comme poignée par un utilisateur de la monture d'appareils (10 ; 33).

10. Système de distribution selon la revendication 9, **caractérisé en ce que** l'étrier est formé par deux pièces de support (50) parallèles reliées au boîtier (14) de la monture d'appareils (10 ; 33) et un profilé chapeau (51) reliant à l'avant les pièces de support (50), le bloc de serrage (52) comportant une embase appropriée à la fixation immédiate sur le profilé chapeau (51).

11. Système de distribution selon l'une des revendications précédentes, **caractérisé en ce que** la monture d'appareils (10 ; 33) possède une ouverture (45) d'insertion d'un outil auxiliaire (42) prévu pour le démontage de la monture d'appareils (10 ; 33).

12. Système de distribution selon la revendication 11, **caractérisé en ce que** l'outil auxiliaire (42) possède une ouverture de préhension (43) destinée au passage d'une main d'un utilisateur et un ergot de butée (44) coopérant avec un élément de cadre fixe (2) et destiné à limiter la course de l'outil auxiliaire (42) sur une étendue nécessaire au démontage de la monture d'appareils (10 ; 33) de l'agencement de barres de tableau (4).

13. Système de distribution selon l'une des revendications précédentes, **caractérisé en ce que** l'un des supports (11) de type console est fixé au boîtier (5) de l'agencement de barres de tableau (4) et les autres supports (11) de type console sont fixés à une paroi intermédiaire (3) qui est placée entre un espace recevant l'agencement de barres de tableau (4) et un espace de raccordement de câbles.

14. Système de distribution selon l'une des revendications précédentes, **caractérisé en ce qu'**un cache-bornes (53) destiné aux barres de raccordement (54) des unités de contact (24) est placé dans le boîtier (14) de type caisse de la monture d'appareils (10 ; 33).

15. Système de distribution selon la revendication 14, **caractérisée en ce que** le cache-bornes comporte une branche parallèle à la plaque de support d'appareils (12) et des languettes de retenue (55) partant de cette branche et s'engageant dans des fentes (56) ménagées dans le boîtier (14).
